Europäisches Patentamt

European Patent Office

Office européen des brevets

(11) Publication number: **0 178 731**
**B1**

(12) **EUROPEAN PATENT SPECIFICATION**

(45) Date of publication of patent specification: **20.07.88**

(21) Application number: **85201660.9**

(22) Date of filing: **11.10.85**

(51) Int. Cl.⁴: **A 01 D 80/02**

(54) **Method for mounting painted tines.**

(30) Priority: **15.10.84 NL 8403130**

(43) Date of publication of application:
**23.04.86 Bulletin 86/17**

(45) Publication of the grant of the patent:
**20.07.88 Bulletin 88/29**

(84) Designated Contracting States:
**AT BE CH DE FR GB IT LI LU NL SE**

(56) References cited:
**DE-A-2 629 519**
**DE-A-2 643 845**
**DE-B-1 207 692**
**DE-C- 462 640**

(73) Proprietor: **P.J. Zweegers en Zonen**
**Landbouwmachinefabriek B.V.**
**Nuenenseweg 165**
**NL-5667 KP Geldrop (NL)**

(72) Inventor: **Quataert, P.M.**
**Berg 73**
**NL-5671 CB Nuenen (NL)**

(74) Representative: **Noz, Franciscus Xaverius, Ir.**
**et al**
**Boschdijk 155 P.O. Box 645**
**NL-5600 AP Eindhoven (NL)**

# Description

The invention relates to a method for applying painted tines on the frame of an agricultural implement, in particular hay making devices, the tines being fixed to the frame by means of a fixing portion which is an integral part of the tines and which is clamped to the frame.

With agricultural implements, in particular hay making devices, frequent use is made of tines made of spring steel, which are clamped to a frame portion of the implement by means of fixing portions forming one entirety with the tines (DE—B—1 207 692). In operation such tines are loaded with forces of varying magnitudes and alternating working directions. In practice now it became apparent that such tines became loose after a comparatively short time, as a result of which the aimed activities could no longer be carried out with the implements concerned.

Eventually it appeared that the hard coat of lacquer mostly applied to such tines remained intact on fixing the tines but crumbled off comparatively fast during the working of the machine which resulted in play on the spot where the tines were fixed.

According to the invention it is now effected that before fixing the tines at least the portions of the fixing portion which get in contact with parts of the frame or of intermediate parts receive no paint ore are cleared of any paint.

Surprisingly it has become apparent that as a result of such a simple measure the defect of tines becoming loose can be prevented.

The invention will be further explained hereinafter with the reference to the accompanying drawings.

Fig. 1 shows in perspective a portion of a tine with a fixing portion.

Fig. 2 shows in perspective a view corresponding with fig. 1 illustrating a possibility for removing the coat of lacquer.

Fig. 3 shows a view corresponding with fig. 1, protecting elements being mounted on the fixing part to prevent paint from being applied to the fixing portion when the tines are being painted.

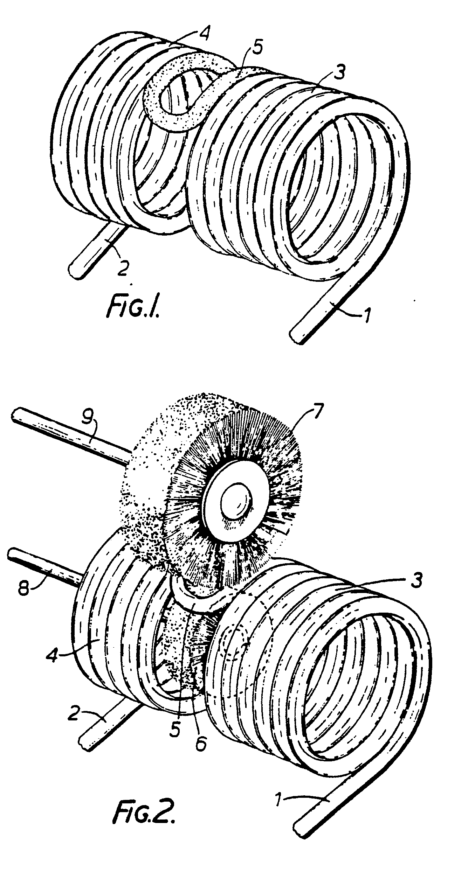

Fig. 1 shows the ends 1 and 2 of a pair of tines, not further illustrated, of a hay making device or the like, said ends joining in the usual manner to coils 3 and 4 respectively, forming one entirety with the tines, said coils being mutually connected by a U-shaped bent portion 5 forming one entirety with said coils, said portion 5 usually being used for fixing the tines to the frame. Said tines with the coils 3 and 4 and fixing portions 5 are usually bent of spring steel wire. The fixing portion 5 is then clamped to a portion of the frame of the agricultural implement by means of a bolt and clamping-plates.

Usually the tines are provided with a coat of paint, frequent use being made of a powder lacquer, which forms a very hard coat of paint. According to the invention it is now effected that before mounting the tines the fixing portion 5, which will butt against frame portions, clamping-plates or the like will have no paint, as is indicated with dots in fig. 1.

By effecting that at least the portion of the fixing portion 5 which touches the further portions has no paint, it is prevented that after mounting of the tines on the frame such a coat of paint can crumble off and consequently may cause the tines to become loose.

Removing the coat of paint from the appropriate portions of the fixing portion can be carried out after the painting of the tines in the manner illustrated in fig. 2, use being made of a pair of circular steel wire brushes 6 and 7, which are fixed to the ends of to be driven axes 8 and 9, said axes extending parallel to each other. Then the steel wire brush 6 is passed through the inside of the spiral-shaped coils 3 or 4 for removing the coat of paint from the inside of the fixing portion 5, whilst steel wire brush 7 works on the outside of the fixing portion.

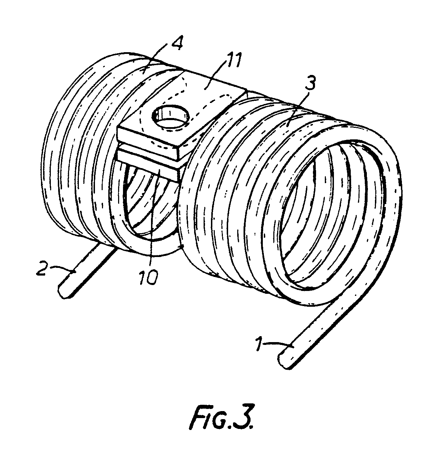

Another possibility is, as illustrated in fig. 3, to mount cover plates 10 and 11, located on both sides of the fixing portion, to said fixing portion before painting. Said cover plates may be clamped to the fixing portion by means of a bolt not further illustrated. It will be apparent, that the mounting of said cover plates 10 and 11 prevents paint from being applied to portions of the fixing portion 5 covered by said plates.

# Claims

1. Method for applying painted tines (1, 2) on the frame of an agricultural implement, in particular hay making device, the tines being fixed to the frame by means of a fixing portion (5) which is an integral part of the tines (1, 2), and which is clamped to the frame, characterised in that before fixing the tines (1, 2) at least the portions of the fixing portion (5) which get in contact with parts of the frame or of intermediate parts receive no paint or are cleared of any paint.

2. Method as claimed in claim 1, characterised in that the coat of paint is brushed from the appropriate portions of the fixing portion (5) after painting by means of steel wire brushes (6, 7).

3. Method as claimed in claim 1, wherein the fixing portion (5) forms part of a spiral-shaped winding-element (3, 4), characterised in that a steel wire brush (6) is passed through the windings of the spiral-shaped element (4) for removing the coat of paint and simultaneously another steel wire brush (7) works on the outside of the fixing portion (5).

4. Method as claimed in claim 1, characterised in that during the painting of the tines (1, 2) the fixing portion (5) is covered by means of cover plates (10, 11).

# Patentansprüche

1. Verfahren zum Anbringen lackierter Zinken (1, 2) am Rahmen eines landwirtschaftlichen Gerätes, insbesondere Gerät zum Heumachen, bei dem die Zinken mittels eines Befestigungsabschnitts (5), der mit den Zinken (1, 2) einstückig ist und der an den Rahmen geklemmt ist, an dem Rahmen angebracht werden, dadurch gekennzeichnet, daß vor dem Befestigen der Zinken (1, 2) wenigstens diejenigen Abschnitte des Befestigungsabschnitts (5), die mit Teilen des Rahmens oder Zwischenteile in Berührung kommen keinen Anstrich erhalten oder von Anstrich befreit werden.

2. Verfahren nach Anspruch 1, dadurch gekennzeichnet, daß der Anstrichüberzug von geeigneten Abschnitten des Befestigungsabschnitts (5) nach dem Anstreichen mittels Stahldrahtbürsten (6, 7) abgebürstet wird.

3. Verfahren nach Anspruch 1, dadurch gekennzeichnet, daß der Befestigungsabschnitt (5) Teil eines schraubenförmig gewickelten Elements (3, 4) ist, dadurch gekennzeichnet, daß eine Stahldrahtbürste (6) zum Entfernen des Anstrichüberzugs durch die Windungen des Elements (4) hindurchgeführt wird und gleichzeitig eine andere Stahldrahtbürste (7) auf die Außenseite des Befestigungsabschnitts (5) einwirkt.

4. Verfahren nach Anspruch 1, dadurch gekennzeichnet, daß während des Anstreichens der Zinken (1, 2) der Befestigungsabschnitt (5) mit Platten (10, 11) bedeckt wird.

**Revendications**

1. Procédé pour le montage de dents peintes (1, 2) sur le bâti d'un instrument agricole en particuliers d'un dispositif de fenaison, les dents étant fixées au bâti au moyen d'une portion de fixation (5) qui est solidaire des dents (1, 2) et qui est serrée au bâti, caractérisé en ce qu'avant la fixation des dents (1, 2) au moins les portions de la portion de fixation (5) qui viennent en contact des parties du bâti ou de parties intermédiaires ne reçoivent pas de peinture ou sont débarrassées de toute peinture.

2. Procédé comme revendiqué à la revendication 1, caractérisé en ce que la couche de peinture est enlevée par brossage des portions appropriées de la portion de fixation (5) après peinture au moyen de brosses à fils d'aciers (6, 7).

3. Procédé comme revendiqué à la revendication 1, dans lequel la portion de fixation (5) fait partie d'un élément à enroulement hélicoïdal (3, 4), caractérisé en ce qu'une brosse à fils d'acier (6) est amenée à passer à travers les enroulements de l'élément hélicoïdal (4) pour enlever la couche de peinture et en même temps une autre brosse à fil d'acier (7) travaille sur l'extérieur de la portion de fixation (5).

4. Procédé comme revendiqué à la revendication 1, caractérisé en ce que, pendant la peinture des dents (1, 2) la portion de fixation (5) est recouverte au moyen de plaques de couverture (10, 11).

Fig.1.

Fig.2.

FIG.3.